# EUROPÄISCHE PATENTSCHRIFT

(11) **EP 2 902 261 B1**
(45) Veröffentlichungstag und Bekanntmachung des Hinweises auf die Patenterteilung: **08.08.2018**
(21) Anmeldenummer: 14003541.1
(22) Anmeldetag: 16.10.2014
(51) Int. Cl.: B60R 1/00

(54) **Verfahren zur bildlichen Darstellung eines Umgebungsbereichs eines Kraftfahrzeugs mit einem Birdview-System**
Method for the visual display of the surroundings of a motor vehicle with a birdýs eye view system
Procédé de représentation imagée d'une zone environnante d'un véhicule automobile équipé d'un système d'affichage de vue d'avion

(30) Priorität: 29.01.2014 DE 102014001496
(43) Veröffentlichungstag der Anmeldung: 05.08.2015
(73) Patentinhaber: MAN Truck & Bus AG, 80995 München (DE)
(72) Erfinder: Echtler, Johannes, 80686 München (DE); Dörner, Karlheinz, 85757 Karlsfeld (DE); Schwertberger, Walter, 82278 Althegnenberg (DE); Römersperger, Xaver, 81543 München (DE); Kraus, Sven, 85748 Garching (DE); Völl, Sebastian, 85221 Dachau (DE)
(74) Vertreter: Liebl, Thomas

(56) Entgegenhaltungen:
- WO-A1-2010/119734
- US-A1- 2006 088 190
- US-A1- 2012 170 812

## Beschreibung

Die Erfindung betrifft ein Verfahren zur bildlichen Darstellung eines Umgebungsbereichs eines Kraftfahrzeugs mit einem Bildanzeige-System als Birdview-System nach dem Oberbegriff des Anspruchs 1.

Ein allgemein bekanntes, gattungsgemäßes Verfahren mit einem Bildanzeige-System weist wenigstens zwei fahrzeugaußenseitig angebrachte Kameras auf, deren Aufnahmewinkelbereiche überlappen und deren aufgenommene Bilder durch sogenanntes Stitching an einer Trennlinie als Stitchingkante im Überlappungsbereich zu einem auf einem Display angezeigten Bild zusammengesetzt werden. Eine der wenigstens zwei Kameras hat einen Frontaufnahmebereich oder einen Heckaufnahmebereich und die andere Kamera weist einen Seitenaufnahmebereich am Fahrzeug auf. Ein Seitenaufnahmebereich und ein Front- bzw. Heckaufnahmebereich überlappen dabei am jeweils zugeordneten Fahrzeugeckbereich. Das Zusammenschneiden (Stitching) der Bilder im Überlappungsbereich erfolgt hier über fest voreingestellte Winkel, insbesondere an einem Winkel, der den Überlappungsbereich symmetrisch teilt. Nachteilig an diesem bekannten Stitching der Bilder ist, dass Objekte, die sich nahe an der Schnittkante aufhalten im zusammengesetzten Bild nicht oder kaum zu erkennen sind. Beim bekannten System "verschwinden" somit Objekte, die sich direkt an der Trennlinie bzw. Stitchingkante der zusammengesetzten Bilder aufhalten. Dies ist besonders kritisch, wenn es sich bei solchen nicht oder kaum für den Fahrer im aufgezeigten Bild erkennbaren Objekt um potentielle Hindernisse oder möglicherweise gefährdete Personen im Bereich der Stitchingkante handelt.

Gemäß der gattungsbildenden US 2006/0088190 A1 kann die Lage einer Stitchingkante beispielsweise beim Einlegen des Rückwärtsganges oder automatisch verändert werden, wodurch ein Objekt, das sich an einer Stitchingkante befindet, für einen Fahrer erkennbar dargestellt werden kann. Dazu ist eine Bildverarbeitungseinheit vorgesehen, die eine Koordinatenumwandlung an der von den Kameras aufgenommenen Bildern durchführt. Die so umgewandelten Bilder werden an einer Stitchingkante zusammengefügt, um ein Gesamtbild zu erhalten.

Die US 2012/0170812 A1 zeigt ein Verfahren zur Erfassung eines beweglichen Objekts. Dabei wird die Lage einer Stitchingkante verändert, wenn ein Objekt an dieser erkannt wird. Auch ist es möglich, eine Bewegung eines Objekts zu berechnen und in Abhängigkeit der Bewegung die Stitchingkante anzupassen.

Aus der WO 2010/119734 A1 ist ein weiteres Verfahren bekannt, bei dem die Lage einer Stitchingkante veränderbar ist, um ein bewegliches Objekt zu erfassen.

Aufgabe der Erfindung ist es, in Verbindung mit einem Verfahren zur bildlichen Darstellung eines Umgebungsbereichs eines Kraftfahrzeugs mit einem Bildanzeige-System als Birdview-System, die Erkennbarkeit insbesondere kritischer Objekte in den durch Stitching zusammengesetzten und einem Fahrer angezeigten Bildern zu verbessern.

Diese Aufgabe wird gelöst mit den Merkmalen des unabhängigen Patentanspruchs 1. Vorteilhafte Ausgestaltungen sind Gegenstand der Unteransprüche.

Wenn das Zusammenschneiden der Bilder an einer Stitchingkante erfolgt, kann diese in ihrer Lage, zum Beispiel mit Hilfe einer Stitchingsoftware, insbesondere in ihrer Winkelausrichtung verändert werden. Bei der Definition eines aufgespannten Stitchingbereichs durch die zwei einander zugeordneten, benachbarten Trennlinien, in dem die Bildanteile beider Kameras überlagert, zum Beispiel halbtransparent überlappend, dargestellt werden, kann bei Bedarf auch die Lage und Ausrichtung der beiden Trennlinien verändert werden. Zudem kann gegebenenfalls die Breite des dadurch definierten Stitchingbereichs verändert werden. Durch diese überlagerte Darstellung wird erreicht, dass Objekte in diesem Stitchingbereich nicht völlig "verschwinden", sondern in jedem Fall für den Fahrer erkennbar bleiben. Die Bildqualität ist aber darstellungsbedingt in einem solchen überlagerten Stitchingbereich reduziert, so dass auch dieser Bereich einstellbar und anpassbar gehalten sein kann, um gegebenenfalls für eine bessere Erkennung Objekte aus diesem Stitchingbereich herauszuholen.

In einer einfachen Ausführungsform kann eine Einstellung und Anpassung manuell vom Fahrer vorgenommen werden. Insbesondere kann der Fahrer damit Objekte, die vorher schwer erkennbar an der Stitchingkante gelegen haben durch deren Veränderung wieder klar erkennbar machen.

In einer besonders bevorzugten Weiterbildung erfolgt die Einstellung und Anpassung einer Stitchingkante oder eines Stitchingbereichs dynamisch und automatisch in Abhängigkeit von erfassten Fahrsituationen und/oder Fahrzeugzuständen. Eine solche Einstellung und Anpassung kann in Abhängigkeit von der Fahrzeuggeschwindigkeit und/oder vom Lenkradwinkel und/oder von einem gesetzten Blinker und/oder vom Zustand der Fahrzeugtüren (offen, geschlossen, öffnend, schließend geöffnet) erfolgen. Beispielsweise kann die Größe des Stitchingbereichs, der mit den zwei Trennlinien aufgespannt wird, beim Fahrzeugstillstand oder kleiner Geschwindigkeit groß und bei demgegenüber großer Geschwindigkeit klein gehalten werden.

Alternativ oder zusätzlich kann das Bildanzeigesystem eine Objekterkennungseinrichtung aufweisen, wobei dann die Einstellung und Anpassung der Stitchingkante oder des Stitchingbereichs abhängig von erkannten Objekten erfolgen kann. Wenn die Objekterkennungseinrichtung eine Objektlage im Bereich der aktuell eingestellten Stitchingkante oder eines Stitchingbereichs ermittelt mit der Möglichkeit, dass dieses Objekt im zusammengesetzten Bild nicht oder nicht deutlich erkennbar ist, kann selbstständig eine Einstellung und Anpassung erfolgen, dergestalt, dass die Stitchingkante bzw. der Stitchingbereich mit seinen Trennlinien vom erkannten Objekt weggerückt wird.

Eine entsprechende Einstellung der Anpassung kann gegebenenfalls auch abhängig von einer ermittelten Position des Fahrzeugs erfolgen, wenn dadurch eine anzeigekritische Lage von Objekten ermittelt wird. Eine solche Positionsbestimmung kann mittels Satellitenkommunikationseinrichtungen, wie beispielsweise GPS oder Galileo, erfolgen, oder mittels anderer Kommunikationseinrichtungen, die beispielsweise zwischen Fahrzeugen Positionsdaten austauschen. Ebenso kann die Positionsbestimmung auch mittels von einer Fahrzeugsensorik erfasster Werte bzw. Daten und/oder mittels fahrzeugseitig hinterlegten Strecken- und/oder Karteninformationen erfolgen.

Durch die teilweise automatisch generierten Einstellungs- und Anpassungsvorgaben in Abhängigkeit unterschiedlicher Gegebenheiten und Kriterien können im System gleichzeitig auch unterschiedliche Einstellungs- und Anpassungsvorschläge vorliegen. In einer Vorrangschaltung für eine Kriterienreihenfolge können unterschiedliche Einstellungs- und Anpassungsvorschläge hinsichtlich ihrer Relevanz berücksichtigt werden. Insbesondere kann dabei eine individuelle, manuelle Einstellung durch den Fahrer vorrangig berücksichtigt und ausgeführt werden. Alternativ zu einer Fahrereinstellung kann eine automatische Einstellung unter Berücksichtigung einer Objekterkennung vorrangig behandelt werden, da ein bereits in einem anzeigekritischen Bereich erkanntes Objekt deutlich erkennbar gemacht werden soll.

Gemäß einer besonders bevorzugten Ausführungsform ist vorgeschlagen, dass die Stitchingkante und/oder der Stitchingbereich durch insbesondere im Wesentlichen in Fahrzeughochachsenrichtung verlaufende Vertikalebenen definiert ist oder sind, die von einem definierten Fahrzeugaußenseitenbereich ausgehen, wobei eine Kamera der wenigstens zwei Kameras einen definierten ersten Aufnahmebereich und eine andere Kamera einen definierten zweiten Aufnahmebereich am Fahrzeug aufweist und/oder erfasst, wodurch ein Überlappungsbereich am zugeordneten definierten Fahrzeugaußenseitenbereich, insbesondere am zugeordneten Fahrzeugeckbereich gebildet ist. Beispielsweise kann die Stitchingkante und/oder der Stitchingbereich durch Vertikalebenen definiert sein, die von einem Fahrzeugeckbereich ausgehen, wobei eine Kamera der wenigstens zwei Kameras einen Frontaufnahmebereich oder Heckaufnahmebereich und eine andere Kamera einen Seitenaufnahmebereich am Fahrzeug aufweist und/oder erfasst, wodurch ein Überlappungsbereich am zugeordneten Fahrzeugeckbereich gebildet ist. Der Aufnahmewinkel der Kameras kann zum Beispiel jeweils 180° betragen und somit ein beispielhafter Überlappungsbereich von 90° an dem zugeordneten Fahrzeugeckbereich ausgebildet sein. Analog kann dies aber auch an der Fahrzeugseite bzw. Längsseite des Fahrzeugs vorgesehen sein: Beispielsweise kann die Stitchingkante und/oder der Stitchingbereich durch Vertikalebenen definiert sein, die von einem definierten Bereich der Fahrzeugseite bzw. Längsseite des Fahrzeugs ausgehen, wobei eine Kamera der wenigstens zwei Kameras einen ersten seitlichen Aufnahmebereich und eine andere Kamera einen zweiten seitlichen Aufnahmebereich am Fahrzeug aufweist und/oder erfasst, wodurch ein Überlappungsbereich an der Fahrzeugaußenseite gebildet ist.

Anhand einer Zeichnung wird die Erfindung lediglich beispielhaft näher erläutert.

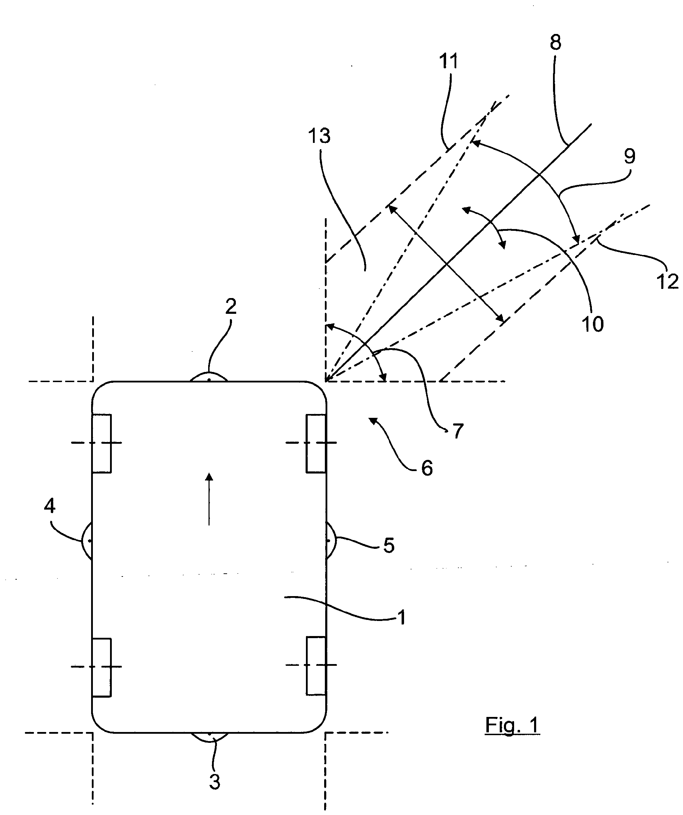

In der einzigen Figur ist schematisch eine Draufsicht auf ein Kraftfahrzeug, hier ein Lastkraftwagen 1, gezeigt, der mit einem Bildanzeige-System ausgerüstet ist. Das Bildanzeige-System weist eine Frontkamera 2, eine Heckkamera 3, eine linksseitige Kamera 4 und eine rechtsseitige Kamera 5 jeweils an der Fahrzeugaußenseite auf. Die Frontkamera deckt nach vorne und zur linken und rechten Seite hin (von oben betrachtet) jeweils einen Frontaufnahmebereich von 180° ab. Ebenso deckt die rechtsseitige Kamera 5 zur Seite und nach vorne und hinten (von oben betrachtet) ebenfalls einen Seitenaufnahmebereich von 180° ab. Im vorderen rechten Eckbereich 6 ergibt sich somit (von oben gesehen) ein Überlappungsbereich 7 für die beiden Kameras 2 und 5.

Die aufgenommenen Bilder der beiden Kameras 2 und 5 werden an einer Trennlinie, einer sogenannten Stitchingkante 8, zum Beispiel mittels einer Stitchingsoftware, zusammengesetzt. Bei dem System nach dem Stand der Technik ist die Lage der Stitchingkante 8 fest voreingestellt, so dass dort befindliche Objekte gegebenenfalls verschwinden können. Um dies zu verhindern, kann die Stitchingkante 8 erfindungsgemäß im vorliegenden Ausführungsbeispiel innerhalb eines Winkelbereichs 9 durch den Fahrer oder gegebenenfalls automatisch abhängig von erfassten Fahrsituationen und/oder Fahrzeugzuständen und/oder von mittels einer Objekterkennungseinrichtung erkannten Objekten verlagert werden, was mit dem Doppelpfeil 10 angegeben ist.

Weiter kann durch zwei hier beispielhaft parallel eingezeichnete Trennlinien 11 und 12 entsprechend einer Funktion einer Stitchingkante ein Stitchingbereich 13 aufgespannt werden. Die Trennlinien 11 und 12 liegen im hier gezeigten Beispielfall jeweils parallel zur Winkelhalbierenden (Stitchingkante 8) des zum Beispiel 90° betragenden Überlappungsbereichs 7. Im Stitchingbereich 13 werden die Bildanteile beider Kameras 2, 5 überlagert dargestellt, zum Beispiel halbtransparent überlappend dargestellt.

Die Größe des Stitchingbereichs 13 ist durch die beiden Trennlinien 11, 12 bestimmt. Je nach der gewünschten Darstellung auf einem (nicht gezeigten) Bildschirm des zusammengesetzten Bildes kann gegebenenfalls durch den Fahrer und/oder automatisiert in Abhängigkeit von Fahrsituationen und/oder Fahrzeugzuständen und/oder von mittels einer Objekterkennungseinrichtung erkannten Objekten die Größe des Stitchingsbereichs durch eine Lageveränderung der Trennlinien 11 und 12 eingestellt und angepasst werden.

### Bezugszeichenliste

- 1: Lastkraftwagen
- 2: Frontkamera
- 3: Heckkamera
- 4: linksseitige Kamera
- 5: rechtsseitige Kamera
- 6: vorderer rechter Eckbereich
- 7: Überlappungsbereich
- 8: Stitchingkante
- 9: Winkelbereich
- 10: Doppelpfeil
- 11: Trennlinie
- 12: Trennlinie
- 13: Stitchingbereich

## Patentansprüche

1. Verfahren zur bildlichen Darstellung eines Umgebungsbereichs eines Kraftfahrzeugs (1) mit einem Bildanzeige-System als Birdview-System, das wenigstens zwei fahrzeugaußenseitig angebrachte Kameras (2, 5) aufweist, deren Aufnahmewinkelbereiche überlappen (Überlappungsbereich 7) und deren aufgenommene Bilder durch sogenanntes Stitching an einer Trennlinie als Stitchingkante (8) im Überlappungsbereich (7) zu einem angezeigten Bild zusammengesetzt werden,
wobei die Lage und/oder Ausrichtung und/oder Weite eines durch zwei einander zugeordneten benachbarten Trennlinien (11, 12) aufgespannten Stitchingbereichs (13) einstellbar und anpassbar ist oder sind,
**dadurch gekennzeichnet, dass** im Stitchingbereich (13) die Bildanteile beider Kameras (2, 5) transparent überlappend dargestellt werden.

2. Verfahren nach Anspruch 1, **dadurch gekennzeichnet, dass** die Einstellung und die Anpassung manuell durch einen Fahrer des Kraftfahrzeugs (1) durchführbar ist.

3. Verfahren nach Anspruch 1 oder Anspruch 2, **dadurch gekennzeichnet, dass** die Einstellung und Anpassung dynamisch und automatisch in Abhängigkeit von erfassten Fahrsituationen und/oder Fahrzeugzuständen erfolgt.

4. Verfahren nach Anspruch 3, **dadurch gekennzeichnet, dass** die Einstellung und Anpassung in Abhängigkeit von der Fahrzeug-Geschwindigkeit (v) und/oder vom Lenkradwinkel (ϑ) und/oder von einem betätigten Blinker und/oder von einem Öffnungs- und/oder Schließzustand einer Fahrzeugtür erfolgt.

5. Verfahren nach einem der Ansprüche 1 bis 4, **dadurch gekennzeichnet, dass** das Bildanzeigesystem zudem eine Objekterkennungseinrichtung aufweist und die Einstellung und Anpassung abhängig von wenigstens einem damit erkannten Objekt erfolgt.

6. Verfahren nach einem der Ansprüche 1 bis 5, **dadurch gekennzeichnet, dass** die Einstellung und Anpassung abhängig von einer ermittelten Position des Fahrzeugs (1) erfolgt.

7. Verfahren nach Anspruch 6, **dadurch gekennzeichnet, dass** die Positionsbestimmung mittels Satellitenkommunikationseinrichtungen und/oder dass mittels von der Fahrzeugsensorik erfasster Werte und/oder mittels fahrzeugseitig hinterlegter Strecken- und/oder Karteninformationen erfolgt.

8. Verfahren nach einem der Ansprüche 1 bis 7, **dadurch gekennzeichnet, dass** beim Vorliegen unterschiedlicher Einstellungs- und Anpassungsvorgaben, die durch unterschiedliche Kriterien generiert wurden, eine Vorrangschaltung für eine Kriterienreihenfolge vorgesehen ist.

9. Verfahren nach Anspruch 8, **dadurch gekennzeichnet, dass** eine manuelle Einstellung durch den Fahrer gefolgt von einer Einstellung durch eine Objekterkennung Vorrang hat.

10. Verfahren nach einem der Ansprüche 1 bis 8, **dadurch gekennzeichnet, dass** die Stitchingkante (8) und/oder der Stitchingbereich (13) durch Vertikalebenen definiert ist oder sind, die von einem definierten Fahrzeugaußenseitenbereich ausgehen, wobei eine Kamera (2) der wenigstens zwei Kameras (2, 5) einen definierten ersten Aufnahmebereich und eine andere Kamera (5) einen definierten zweiten Aufnahmebereich am Fahrzeug (1) aufweist und/oder erfasst, wodurch ein Überlappungsbereich (7) am zugeordneten definierten Fahrzeugaußenseitenbereich gebildet ist.

## Claims

1. Method for imaging a surrounding region of a motor vehicle (1) with an image display system as a bird-view system having at least two cameras (2, 5), which are attached to the outside of the vehicle and have recording angle ranges that overlap (overlap region 7), with the recorded images of the cameras being joined together to form a displayed image by way of so-called stitching at a separating line as a stitching edge (8) in the overlap region (7),
wherein the pose and/or orientation and/or width of a stitching region (13), which is defined by two adjacent separating lines (11, 12) that are assigned to one another, is/are settable and adaptable,
**characterized in that** the image components of both cameras (2, 5) are presented in the stitching region (13) as transparently overlapping.

2. Method according to Claim 1, **characterized in that** the setting and the adaptation is performable manually by a driver of the motor vehicle (1).

3. Method according to Claim 1 or Claim 2, **characterized in that** the setting and adaptation is performed dynamically and automatically in dependence on captured driving situations and/or vehicle states.

4. Method according to Claim 3, **characterized in that** the setting and adaptation is performed in dependence on the vehicle speed (v) and/or on the steering wheel angle (ϑ) and/or on an activated turn signal and/or on an opening and/or closing state of a vehicle door.

5. Method according to one of Claims 1 to 4, **characterized in that** the image display system additionally has an object recognition device and the setting and adaptation is performed in dependence on at least one object that is recognized therewith.

6. Method according to one of Claims 1 to 5, chparacterized in that the setting and adaptation is performed in dependence on an ascertained position of the vehicle (1).

7. Method according to Claim 6, **characterized in that** the position determination is performed by way of satellite communication devices and/or by way of values which have been captured by the vehicle sensor system and/or by way of route and/or map information stored in the vehicle.

8. Method according to one of Claims 1 to 7, **characterized in that** priority switching for a criterion sequence is provided if various setting and adaptation specifications exist that were generated due to different criteria.

9. Method according to Claim 8, **characterized in that** a manual setting by the driver followed by setting by an object recognition has priority.

10. Method according to one of Claims 1 to 8, **characterized in that** the stitching edge (8) and/or the stitching region (13) is/are defined by vertical planes which proceed from a defined vehicle exterior region, wherein a camera (2) of the at least two cameras (2, 5) has and/or captures a defined first recording region and another camera (5) has and/or captures a defined second recording region of the vehicle (1), as a result of which an overlap region (7) is formed at the assigned defined vehicle exterior region.

## Revendications

1. Procédé de représentation graphique d'une zone environnante d'un véhicule automobile (1) comportant un système d'affichage d'images en tant que système de visualisation en vue d'oiseau (Birdview), qui comporte au moins deux caméras (2, 5) montées à l'extérieur du véhicule, dont les zones d'angle de capture se chevauchent (zone de chevauchement 7) et dont les images capturées sont assemblées en une image affichée par un système dit de suture (stitching) sur une ligne de séparation en tant que bord de suture (8) dans la zone de chevauchement (7),
dans lequel la position et/ou l'orientation et/ou la largeur d'une zone de suture (13) traversée par deux lignes de séparation (11, 12) adjacentes mutuellement associées est ou sont réglables et adaptables,
**caractérisé en ce que**, dans la zone de suture (13), les composantes d'image des deux caméras (2, 5) sont affichées de manière transparente en superposition.

2. Procédé selon la revendication 1, **caractérisé en ce que** le réglage et l'adaptation peuvent être effectués manuellement par un conducteur du véhicule automobile (1).

3. Procédé selon la revendication 1 ou la revendication 2, **caractérisé en ce que** le réglage et l'adaptation s'effectuent dynamiquement et automatiquement en fonction de situations de conduite et/ou d'états de véhicule détectés.

4. Procédé selon la revendication 3, **caractérisé en ce que** le réglage et l'adaptation s'effectuent en fonction de la vitesse (v) du véhicule et/ou de l'angle de braquage (□) et/ou d'un clignotant actionné et/ou d'un état d'ouverture et/ou de fermeture d'une porte de véhicule.

5. Procédé selon l'une des revendications 1 à 4, **caractérisé en ce que** le système d'affichage d'images comporte également un dispositif de reconnaissance d'objets et **en ce que** le réglage et l'adaptation s'effectuent en fonction d'au moins un objet reconnu par celui-ci.

6. Procédé selon l'une des revendications 1 à 5, **caractérisé en ce que** le réglage et l'adaptation s'effectuent en fonction d'une position déterminée du véhicule (1).

7. Procédé selon la revendication 6, **caractérisé en ce que** la position est déterminée au moyen de dispositifs de communication par satellite et/ou au moyen de valeurs détectées par les capteurs du véhicule et/ou au moyen d'informations routières et/ou cartographiques stockées côté véhicule.

8. Procédé selon l'une des revendications 1 à 7, **caractérisé en ce qu'**en cas de présence de spécifications différentes concernant le réglage et l'adaptation qui ont été générées au moyen de critères différents, il est prévu un circuit de hiérarchisation pour une séquence de critères.

9. Procédé selon la revendication 8, **caractérisé en ce qu'**un réglage manuel par le conducteur a priorité sur un réglage par reconnaissance d'objets effectué ensuite.

10. Procédé selon l'une des revendications 1 à 8, **caractérisé en ce que** le bord de suture (8) et/ou la zone de suture (13) est ou sont définis par des plans verticaux partant d'une zone latérale extérieure définie du véhicule, dans lequel une caméra (2) desdites au moins deux caméras (2, 5) comporte et/ou détecte une première zone de capture définie et dans lequel une autre caméra (5) comporte et/ou détecte une seconde zone de capture définie sur le véhicule (1), cela conduisant à la formation d'une zone de chevauchement (7) sur la zone latérale extérieure définie associée du véhicule.
